# EUROPEAN PATENT SPECIFICATION

(11) **EP 3 606 331 B1**
(45) Date of publication and mention of the grant of the patent: **21.02.2024**
(21) Application number: 18720778.2
(22) Date of filing: 03.04.2018
(51) Int. Cl.: A01G 18/60, A01G 18/70

(54) **METHOD FOR CULTIVATING EDIBLE FUNGI**
VERFAHREN ZUR KULTIVIERUNG VON ESSBAREN PILZEN
PROCÉDÉ DE CULTURE DE CHAMPIGNONS COMESTIBLES

(30) Priority: 05.04.2017 BE 201705239
(43) Date of publication of application: 12.02.2020
(73) Proprietor: Delfort Comm. V., 8760 Meulebeke (BE); PD Consult Comm. V., 8211 Aartrijke (BE)
(72) Inventor: DELBEKE, Pierre, 8211 Aartrijke (BE); DELBEKE, Paul, 8760 Meulebeke (BE)
(74) Representative: Chielens, Kristof
(86) International application number: PCT/IB2018/052276
(87) International publication number: WO 2018/185644

(56) References cited:
- WO-A1-2015/164958
- WO-A2-2014/170911
- JP-A- 2002 291 334
- NL-A- 9 001 797
- Unknown: "Ontwerpen van geïntegreerde concepten voor agrarische productie in het kader van een Agro-Eco Park in Horst aan de Maas", Praktijkonderzoek Plant & Omgeving B.V. , vol. PPO Publicatie, no. 588 1 December 2003 (2003-12-01), pages 29-35, XP002776727, Retrieved from the Internet: URL:http://edepot.wur.nl/274367 [retrieved on 2017-12-24]

## Description

The present invention relates to a method for cultivating edible fungi, such as mushrooms, on a commercial site, in which cultivation takes place in accordance with a cultivation cycle which successively comprises one or more preparatory phases and one or more harvesting phases, and in which the site comprises at least a set of cultivation cells, in which this set comprises a first cultivation cell and a second cultivation cell and the cultivation cycle is distributed over these at least two cultivation cells by moving the cultivation from the first cultivation cell, in which at least one preparatory phase takes place, to the second cultivation cell, in which at least one harvesting phase takes place in the second cultivation cell.

A commercial site which is configured to enable such a method to be carried out is also described, in which this site comprises at least a set of cultivation cells, in which this set comprises a first, a second and a third cultivation cell.

The cultivation of edible fungi, more specifically the cultivation of mushrooms, takes place in accordance with a certain cultivation cycle. Thus, this cultivation cycle comprises one or more preparatory phases and one or more harvesting phases.

On most commercial sites, cultivation currently starts from a colonized substrate which is covered with a layer of casing soil. Colonized substrate is substrate which has been grafted with fungal mycelium, specifically mushroom mycelium (mushroom spawn), in which case the mycelium has been allowed to (partly) colonize the substrate. In order to start cultivation, this colonized substrate is disposed in a cultivation cell and a layer of casing soil is spread on top of this substrate. This is the start of the preparatory phases which are necessary before mushrooms can be harvested. In this case, the preparatory phases comprise the mycelium growth/mycelium phase and the bud phase. During the mycelium phase, the mycelium grows from the colonized substrate and through the casing soil. Subsequently, buds are formed by the mycelium. This is the bud phase. Taken together, this mycelium phase and budding phase last for approximately 14 days. A company may also opt to execute the phases which result in a colonized substrate on the same site. These phases may then also be referred to as preparatory phases.

A harvesting phase is a period during which the mushrooms are harvested. Harvesting is also referred to by the term 'picking'. Picking may take place manually, but may also be carried out by means of a machine which cuts the mushrooms. Usually, mushrooms destined to be sold fresh are picked by hand, as manual picking ensures good and visible quality. Mushrooms destined for canning and freezing are usually of lower quality and are usually picked by machine.

After the budding phase, the harvesting phases start. In the case of the classic cultivation of mushrooms, these harvesting phases start with a first harvesting phase which is also referred to as the first flush. During the first flush, picking is carried out for a period of 3 to 6 days, after which picking is ceased for a few days. Then the second harvesting phase (second flush) starts. During this second harvesting phase, picking is carried out for on average 2 to 5 days. If required, a third harvesting phase (third flush) may be necessary. A fourth harvesting phase (fourth flush) is also possible. In this case, these flushes, each of which is a combination of picking, waiting until picking can resume and, if required, treating the cultivation, such as spraying with water, each last approximately 1 week. The yield of the first flush is usually greater than that of the second flush. The yield of the second flush is greater than that of the third flush, etc. Usually, the quality of each flush deteriorates as well.

With the known methods which use two cultivation cells, there is a first cultivation cell in which the mycelium phase and the budding phase take place, and a second cultivation cell in which one or more harvesting phases are executed. In the first cultivation cell, several layers of beds are stacked on top of each other, for example, and these beds are filled with colonized substrate and casing soil. The mycelium phase and the budding phase take place in the two weeks during which the colonized substrate and the casing soil are placed in the beds of the first cultivation cell.

Subsequently, the cultivation is moved to a second cultivation cell, for example by means of a pulling device. In the second cultivation cell, the beds are arranged in one layer or two layers (or multiple layers). The advantage here is that, by stacking beds in the first cultivation cell, it is possible to accurately regulate the climate, resulting in an optimum mycelium phase and budding phase. In addition, only a small base surface area is required. As no picking takes place in the first cultivation cell, the beds can be placed very close together. If the beds in the second cultivation cell are stacked in one layer or two layers, it is readily possible to pick the mushrooms by hand. If desired, the further processing of the picked mushrooms may be (partly) mechanised.

The publication entitled "Ontwerpen van geïntegreerde concepten voor agrarische productie in het kader van een Agro-Eco Park in Horst aan de Maas" ["Designs for integrated concepts for agricultural production in an Agro-Eco Park in Horst aan de Maas"] by Praktijkonderzoek Plant & Omgeving B.V., to be found in part PPO Publication, No. 588, 1st December 2003, pages 29-35, , inter alia describes a method for cultivating mushrooms in which use is made of crates. In this case, the harvesting phase takes place in a different cultivation cell than the previous phases.

In many cases, only two harvesting phases/flushes are executed in order to optimise the rotation between these two cultivation cells. In that case, the cultivation only remains in the second cultivation cell for two weeks, as a result of which the cultivation remains in the first cultivation cell and the second cultivation cell for approximately the same amount of time and the rotation between the cultivation cells is optimal. Consequently, after a said cultivation cell has been emptied, this cultivation cell can quickly be filled with a different cultivation of mushrooms again. It is then possible to grow up to 26 cultivations per year for every two cultivation cells (52 weeks divided by 2).

A drawback here is the fact that the cultivation, and thus the substrate with casing soil, is discarded after the second flush, despite this substrate not yet being depleted. In principle, it would be possible to execute a third flush in the second cultivation cell, but then the rotation between the cultivation cells would no longer be optimal. Also, executing a third flush would increase the risk of diseases. The reason for this is that the cultivation then remains in one cultivation cell for a prolonged period of time, giving diseases sufficient time to multiply/develop. If working with 3 flushes, the second cultivation cell would have to be sterilized by steaming after harvesting, before introducing another cultivation in the second cultivation cell. As the yield and the quality of the third flush is low, the additional yield of a third flush does not outweigh the abovementioned drawbacks. From an economic point of view, it is thus more attractive to discard the non-depleted substrate after two flushes.

It is therefore an object of the invention to optimize the cultivation of fungi, and more specifically the cultivation of mushrooms, and to maximize the yield per harvest.

This object is achieved by providing a method for cultivating edible fungi, such as mushrooms, on a commercial site, in which cultivation takes place in accordance with a cultivation cycle which successively comprises one or more preparatory phases and one or more harvesting phases, and in which the site comprises at least a set of cultivation cells, in which this set comprises a first cultivation cell and a second cultivation cell and the cultivation cycle is distributed over these at least two cultivation cells by moving the cultivation from the first cultivation cell, in which at least one preparatory phase takes place, to the second cultivation cell, in which at least one harvesting phase takes place in the second cultivation cell, in which the set of cultivation cells comprises at least a third cultivation cell and the cultivation cycle comprises at least two harvesting phases, in which the cultivation cycle is distributed over said at least 3 cultivation cells of the set of cultivation cells by moving the cultivation from the second cultivation cell to the third cultivation cell, and in which at least one harvesting phase takes place in the third cultivation cell.

By here distributing the cultivation cycle over at least three cultivation cells, it is possible to optimize the rotation between the cultivation cells better here. By harvesting in the second cultivation cell and also harvesting in the third cultivation cell, it is possible to pick here for a prolonged period of time, without this adversely impacting on the rotation between the cultivation cells. If cultivation takes place by substrate cultivation, this means that the yield per amount of colonized substrate can be higher here than with the existing methods of substrate cultivation where only two cultivation cells are used per cultivation. Here, an increase in the yield does not mean a loss of time. For example, if 3 cultivation cells are used to cultivate mushrooms, the first cultivation cell may be used for the mycelium phase and the budding phase to take place, which together take two weeks, 2 flushes of 1 week each may be executed in the second cultivation cell and one or possibly 2 flushes of 1 week each may be executed in the third cultivation cell. In this case, one or two extra flushes are possible without the rotation of the first cultivation cell and the second cultivation cell being compromised. By distributing the harvest over two cultivation cells, it is possible to harvest for a prolonged period of time without an increase in the risk of diseases and without an increase in the hygiene risks.

In addition, the investment in a third cultivation cell may be relatively small, because there are fewer requirements with regard to later harvesting phases. As the yield and quality of the successive harvesting phases always decrease, optimum climate control is of lesser or no importance for this third cultivation cell. As the yield and quality of the at least one harvesting phase in the third cultivation cell are lower than those of the second cultivation cell, it is in addition possible, for example in the third cultivation cell, to opt for picking to be performed only by machine. As a result thereof, the additional labour costs can be limited. If harvesting in the second cultivation cell is performed by hand, the base surface area of the third cultivation cell may then be made smaller than, for example, that of the second cultivation cell. Obviously, it is also possible to perform picking by hand in the third cultivation cell, if desired, and it is also possible to perform picking by machine in the second cultivation cell, if desired. By means of this method, it is thus possible to increase the yield and profit significantly without having to make excessively large investments, these being the outlay for a third cultivation cell.

If the fungi are mushrooms, the harvesting phases preferably correspond to the abovementioned flushes and the cultivation is moved between the second cultivation cell and the third cultivation cell between two flushes. However, it is also possible to move the cultivation during a flush, so that several harvesting phases do not correspond to flushes.

Here, each set of cultivation cells has at least three cultivation cells, so that the cultivation is distributed over at least three cultivation cells. By distributing the cultivation, it is possible to prevent the cultivation from remaining in one cultivation cell for too long, as a result of which the risk of diseases and hygiene risks are reduced significantly with this method according to the invention. As a result thereof, these cultivation cells have to be cleaned less intensely after the passage of a cultivation. The yield of the cultivation also increases because every cultivation which is cultivated according to the method according to the invention will have significantly fewer diseases. If desired, a said set of cultivation cells may comprise a fourth cultivation cell, a fifth cultivation cell, a sixth cultivation cell, etc., so that the cultivation is distributed over more than three cultivation cells.

Preferably, cultivation takes place on a substrate and the substrate is moved along when the cultivation is moved between two said cultivation cells. With most substrate cultivation methods, it is simple to move the substrate. For example, if crates are used and the substrate is arranged in crates in the first cultivation cell, these crates can be moved from the first cultivation cell to the second cultivation cell and from the second cultivation cell to the third cultivation cell. If mats are used for the substrate cultivation, the substrate can be moved between two cultivation cells by means of known pulling devices, optionally together with the mats.

Furthermore preferably, each said cultivation cell comprises beds and the substrate is arranged in the beds. These beds (racks) are a type of long trays on legs in which the substrate is disposed. These beds may be arranged in one layer, but they may also be placed on top of one another. This is then referred to as multi-layered substrate cultivation in beds. The cultivation in beds is quite attractive from an economic point of view. There are also all kinds of systems to move the cultivation efficiently between cultivation cells with beds. These systems are often referred to as pulling systems. Moving the cultivation between cultivation cells is then referred to as pulling the cultivation between cultivation cells.

Preferably, in one or more of the said cultivation cells, two or more layers of beds are arranged on top of one another. As a result, the base surface area of these cultivation cells can be reduced, so that the available base surface area of a commercial site can be used in an optimum manner. In addition, it is desirable to use two or more layers of beds during the preparatory phases, because it is then possible to control the climate in the cultivation cell in a more accurate and simple manner. Preferably, only one or more preparatory phases and no harvesting phases take place in the first cultivation cell. Here, the beds can then be stacked more closely together, because no pickers and/or picking machines have to pick here. As a result, the required base surface area and the required total volume of the first cultivation cell is small, so that the climate can be controlled in a simple and optimum manner.

Furthermore preferably, the number of layers of beds in the second cultivation cell is smaller than the number of layers of beds in the first cultivation cell. Also preferably, the number of layers of beds in the second cultivation cell is smaller than the number of layers of beds in the third cultivation cell. Thus, for example, the first cultivation cell may comprise 4 layers of beds, the second cultivation cell may comprise 2 layers of beds and the third cultivation cell may comprise 4 layers of beds. Another arrangement is, for example, that the first cultivation cell comprises 3 layers of beds, the second cultivation cell comprises 1 layer of beds and the third cultivation cell comprises 3 layers of beds, if cutting by machine is to be performed, or again comprises 1 layer of beds if picking by hand is to be performed.

Also furthermore preferably, in the first cultivation cell, several layers of beds are placed one above the other and, in the second cultivation cell, the beds are placed in only one layer. Manual picking of beds which extend in one layer is very simple. In this case as well, it is possible to use machines which are situated next to and/or above the beds in order to optimize transportation of the picked fungi. In this way, it is possible, for example, to provide a transport system in the mushroom cultivation in which the picked mushrooms can be placed and in which the base is cut off by machine at the end of this transport system. In an alternative embodiment, the beds may be arranged in the second cultivation cell in two layers. The picking of two layers of beds may also still be performed relatively quickly. It is also possible to opt for the use of a picking machine in the second cultivation cell.

Also furthermore preferably, in the third cultivation cell, several layers of beds are arranged one above the other. As a result, the base surface area required for this third cultivation cell is small. If picking is performed by machine, it is possible to provide one or more devices in a simple manner, by means of which several layers of beds can be cut in a simple manner.

In a particularly preferred embodiment, mats are used for the cultivation and the substrate is arranged on these mats. When moving the cultivation between two said cultivation cells, the mats and the substrate can then be moved together. Each cultivation cell may also comprise one or more mats, in which, when the substrate is moved from a said cultivation cell to another said cultivation cell, the substrate which is situated on the mats of the former cultivation cell is placed on the mats of the other cultivation cell. With this latter option, the mats of the former cultivation cell do not end up in the other cultivation cell. This has the advantage that the risk of contamination, diseases, etc. is reduced. The reason for this is that the contaminated mats are not moved along as well. The cultivation on mats may also use, for example, a combination of the two abovementioned options for moving substrate.

In a preferred embodiment, said at least three cultivation cells of the said set of cultivation cells are virtually in line with one another, in order to thus optimize the displacement of the cultivation between these said three cultivation cells. Here, the cultivation cells are virtually in line with one another. Preferably, the second cultivation cell is situated between the first cultivation cell and the third cultivation cell. Furthermore preferably, there is some intermediate space between the successive cultivation cells so that the displacement of the cultivation between the said cultivation cells can proceed smoothly. For example, if the cultivation is a substrate cultivation on mats, it is possible to use devices to move the substrate, in which case these devices are largely arranged in a said intermediate space and at least during displacement of the cultivation.

The amount of time which the cultivation spends in the first cultivation cell preferably virtually corresponds to the amount of time which the cultivation spends in the second cultivation cell. The amount of time which the cultivation spends in the third cultivation cell is then preferably virtually equal to or less than the amount of time which the cultivation spends in the second cultivation cell (or in the first cultivation cell). Furthermore preferably, the amount of time which the cultivation spends in each said cultivation cell is preferably virtually identical. Here, an optimum rotation between the cultivation cells has then been achieved, so that a cultivation can be present in every cultivation cell during virtually the entire year. Here, the capacity of the cultivation cells is used to an optimum extent.

Furthermore preferably, the amount of time which the cultivation spends in the first cultivation cell and the amount of time which the cultivation spends in the second cultivation cell is virtually 2 weeks. This means that, for cultivating mushrooms by means of colonized substrate, the preparatory phases, being the mycelium phase and the budding phase, can take place in one cultivation cell, preferably in the first cultivation cell. The reason for this is that these preparatory phases together last approximately 14 days. This also means that 2 harvesting phases, being 2 flushes, can take place in the second cultivation cell. It is also possible for 1 or 2 harvesting phases, being 1 or 2 flushes, to take place in the third cultivation cell without compromising the optimum rotation. Here, the capacity of the substrate is used to an optimum extent. In principle, it would be possible to provide a fourth and/or fifth cultivation cell for a fifth and a sixth flush here, but this is less attractive from an economic point of view as the fifth and sixth flushes produce a small yield and significantly lower quality. It is possible to opt for 2 flushes to take place in the third cultivation cell and thus to leave the substrate for example virtually two weeks in the third cultivation cell. However, it is possible to allow only 1 flush to take place or to harvest once and thus already to remove the substrate from the third cultivation cell, for example, after 1 week or a few days.

After a said cultivation has been moved from one cultivation cell to the other cultivation cell, the one cultivation cell is filled again virtually immediately with a cultivation which is in an earlier phase of the cultivation cycle. The reason for this is to optimize the rotation and to produce as great a yield as possible per unit time. Preferably, this third cultivation cell is also filled virtually immediately when the substrate has been removed from the third cultivation cell after one or more of said harvesting phases.

Furthermore preferably, up to 26 cultivations per year are possible for every said set of cultivation cells.

In a highly preferred embodiment, every cultivation is distributed over only 3 cultivation cells, in which one or more preparatory phases take place in the first cultivation cell, at least one harvesting phase takes place in the second cultivation cell and at least one harvesting phase takes place in the third cultivation cell. The displacement takes up a certain amount of time and requires a certain amount of work. However, it is desirable to distribute the cultivation over three cultivation cells in order to achieve the advantages of the cultivation according to the invention described here. Distributing the cultivation over three cultivation cells is most advantageous.

In an alternative embodiment, the cultivation may be distributed over more than 3 cultivation cells, for example over 5 or 6 cultivation cells, in which the cultivation in each case stays virtually 1 week in each cultivation cell. Subsequently, the mycelium phase takes place in one cultivation cell, followed by the budding phase in the next cultivation cell, followed by 1 flush in yet a further cultivation cell, etc.

A commercial site preferably comprises several said sets cultivation cells, so that several cultivations which are in the same phase of the cultivation cycle can take place simultaneously.

In a preferred embodiment, the fungi are picked by machine, at least during the last harvesting phase. The later in the cultivation cycle, the more the yield and the quality of the fungi deteriorate. This means that the yield and the quality of the last harvesting phase of the cultivation is lower, compared to the previous harvesting phase(s). In countries where labour costs are high, it is then less attractive to pick the last harvesting phase by hand. If at least one of the previous harvesting phases is then picked by hand, it is possible to cater for two markets with one cultivation, namely the fresh market and the industrial market. A company is then not dependent on one market, so that the flow of earnings is made more secure.

Preferably, the fungi are picked by machine during the one or more harvesting phases taking place in the third cultivation cell. By carrying out the picking in the third cultivation cell by machine, it is possible to completely adapt the third cultivation cell to picking by machine and consequently provide a smaller base surface area. For example, it is possible to stack the beds in several layers on top of one another if beds are used in the cultivation.

Also preferably, the fungi are picked by hand during the one or more harvesting phases taking place in the second cultivation cell. If only one or more preparatory phases take place in the first cultivation cell, picking is carried out for the first time in the second cultivation cell. Consequently, the quality and the yield of the harvesting phases in the second cultivation cell are high, as a result of which it is attractive to pick for the fresh market and thus to pick by hand.

The description also provides a commercial site for cultivating fungi, such as mushrooms, in which this site comprises at least a set of cultivation cells, in which this set comprises a first, a second and a third cultivation cell, and in which these cultivation cells are provided to allow a method as described above to take place, wherein said three cultivation cells are in line with one another.

The first, second and third cultivation cell are then preferably constructed and configured in such a way that each of them is adapted for the one or more phases of the cultivation which are intended to take place therein. Thus, the first cultivation cell is then preferably constructed and configured so that it is very suitable for the preparatory phases. If picking is carried out by hand in the second cultivation cell, this second cultivation cell is then constructed and configured so that picking by hand can readily be performed. If desired, machines or parts of machines are then also arranged in the second cultivation cell, so that processing/transportation of the picked fungi can be partly automated. If picking by machine is carried out in the third cultivation cell, then this third cultivation cell is preferably constructed so that it is ideal for harvesting fungi by machine.

Preferably, the first cultivation cell comprises a device for controlling the climate, so that the climate of the first cultivation cell is adaptable to the at least one preparatory phase which takes place therein.

Preferably, the base surface area of the second cultivation cell is greater than the base surface area of the first cultivation cell. If the cultivation in the first cultivation cell takes place on several layers of beds, then the cultivation in the second cultivation cell preferably, if picking therein is carried out by hand, takes place on one layer of beds or at least on fewer layers than in the first cultivation cell. As a result thereof, the base surface area of the second cultivation cell has to be greater than that of the first cultivation cell.

The base surface area of the second cultivation cell is preferably greater than the base surface area of the third cultivation cell. The yield and the quality of the fungi are usually lower in the third cultivation cell than in the second cultivation cell, so that it is desirable for the costs of the third cultivation cell to be less. To this end, a third cultivation cell with a smaller base surface area may be provided, in which the cultivation takes place, for example, on several layers of beds.

In a preferred embodiment, the commercial site comprises several said sets of cultivation cells, so that several cultivations which are in the same phase of the cultivation cycle can take place simultaneously on the commercial site.

The present invention will now be explained in more detail by means of the following detailed description of a preferred embodiment of a method according to the present invention. The sole aim of this description is to give illustrative examples and to indicate further advantages and particulars, and it can therefore by no means be interpreted as a limitation of the area of application of the invention or of the patent rights defined in the claims.

Reference numerals are used in this detailed description to refer to the attached drawings, in which:

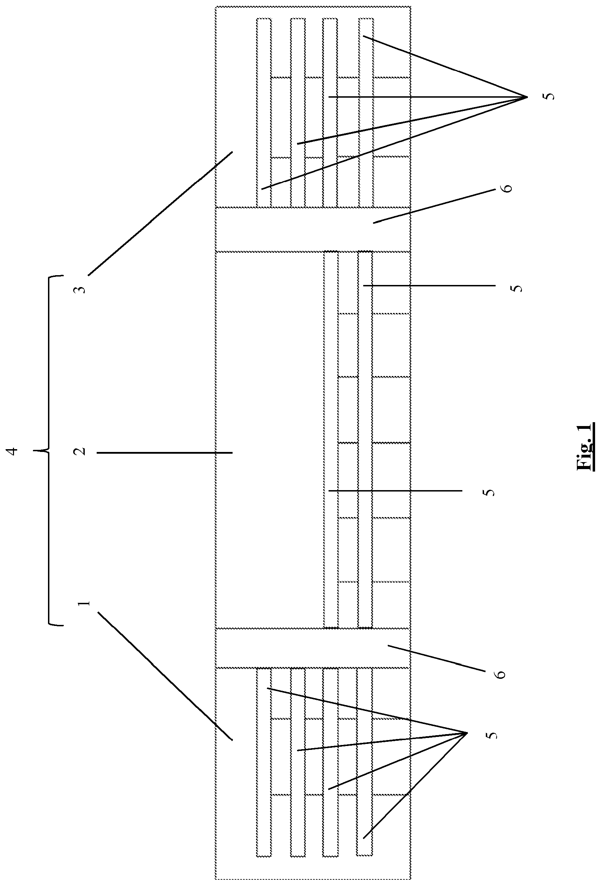

- ***Fig. 1*** shows a diagrammatic representation of a cross section through the commercial site at the location of one set of cultivation cells;

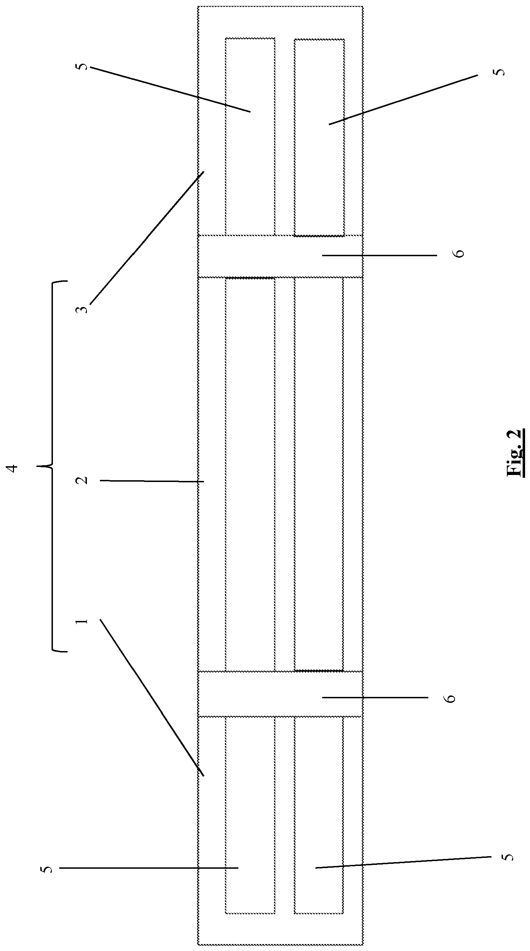

- ***Fig. 2*** shows a diagrammatic representation of a top view of the commercial site at the location of one set of cultivation cells.

The commercial site is a site on which mushrooms are cultivated. To this end, the commercial site comprises several sets of cultivation cells (4). Each set of cultivation cells (4) comprises a first cultivation cell (1), a second cultivation cell (2) and a third cultivation cell (3). The base surface area of the second cultivation cell (2) is virtually twice as large as the base surface area of the first cultivation cell (1). The base surface area of the first cultivation cell (1) is virtually equal in size to the base surface area of the third cultivation cell (3). Below, one set of cultivation cells (4) is discussed and this set (4) is shown diagrammatically in the figures. Each set of cultivation cells (4) is of similar construction.

The commercial site is provided with a climate device, with means of this climate device being present in the first cultivation cell (1). As a result thereof, the climate of the first cultivation cell (1), i.e. the temperature, the humidity, etc., is accurately controllable. In the second cultivation cell (2), one or more machines are present for transporting hand-picked mushrooms and for cutting off the bases of picked mushrooms. As a result thereof, the pickers of the mushrooms do not have to cut off the bases by hand, resulting in quick picking. The third cultivation cell (3) is a simple space in which a mechanical picking device is present.

Furthermore, beds (5) are present in every cultivation cell (1, 2, 3). In the first cultivation cell (1), these beds (5) are stacked in four layers, in the second cultivation cell (2) the beds (5) are stacked in two layers and in the third cultivation cell (3) the beds (5) are stacked in four layers. The total bottom surface of the beds (5), on which substrate is arrangeable, is virtually identical in every cultivation cell (1, 2, 3). Therefore, the amount of substrate which can be applied in every cultivation cell (1, 2, 3) is identical (see below). Mats are also present in every cultivation cell (1, 2, 3), so that substrate cultivation on mats can take place.

On this commercial site, mushrooms are grown according to the method described below.

Cultivation takes place according to a cultivation cycle comprising the following successive steps: a mycelium phase, a budding phase, a first harvesting phase (flush), a second harvesting phase, a third harvesting phase and a fourth harvesting phase.

The first step is the mycelium phase and starts with a colonized substrate and casing soil. Here, the colonized substrate is compost which has been colonized with mushroom mycelium. This colonized substrate is preferably supplied to the commercial site. In an alternative embodiment, this colonized substrate may be produced on the commercial site. The casing soil is also supplied to the site.

At the start of the cultivation cycle, the substrate and the casing soil are arranged in the beds (5) of the first cultivation cell (1) by applying the substrate and the casing soil on the mats of the first cultivation cell (1) and pulling these mats in the beds (5). The substrate and the casing soil are arranged on the mats in such a way that a layer of casing soil is situated on top of a layer of substrate. When applying the substrate and the casing soil on the mats, the mats are unrolled and introduced in the beds (5). After this substrate and the casing soil have been arranged in the beds (5), the first cultivation cell (1) is closed and the mycelium phase can start. The climate in the first cultivation cell (1) is controlled in such a way that it is optimal during the entire mycelium phase. During the mycelium phase, the mycelium grows from the substrate through the casing soil, after which buds are formed. This is then the budding phase. These two said phases together last for approximately 14 days and during these days, the climate is controlled and adjusted in an optimum way by means of the climate device.

After these approximately 14 days, the cultivation is taken from the first cultivation cell (1) to the second cultivation cell (2). This is achieved by rolling up the mats of the first cultivation cell (1) and transferring the substrate layer with the layer of casing soil to the mats of the second cultivation cell (2) during the rolling up, by unrolling the mats of the second cultivation cell (2). In order to optimize the transfer of the cultivation between these said cultivation cells (1, 2), use is made of a pulling device. In this case, transfer takes place from four-layered beds (5) to two-layered beds (5). There is an intermediate space (6) between the first cultivation cell (1) and the second cultivation cell (2), so that the displacement of the cultivation between these said cultivation cells (1, 2) can proceed quickly. During displacement of the cultivation, the pulling device is then substantially arranged in this intermediate space (6).

After the cultivation has been arranged on the mats of the second cultivation cell (2) and thus sits in the beds (5) of the second cultivation cell (2), the first harvesting phase or first flush starts. During this first flush, which lasts approximately 1 week, manual picking is initially carried out for 3 to 6 days and the picked mushrooms are placed in a said machine of the second cultivation cell (2). The first flush is immediately followed by the second flush, which lasts approximately 1 week and during which manual picking is initially carried out for 2 to 5 days. These mushrooms are also introduced in a said machine of the second cultivation cell (2) in order to transport these picked mushrooms and cut off their bases. After the second flush, the cultivation is transferred to the third cultivation cell (3). The cultivation thus also stays in the second cultivation cell (2) for approximately 14 days.

The transfer of the cultivation from the second cultivation cell (2) to the third cultivation cell (3) proceeds in a similar way to the transfer of the cultivation from the first cultivation cell (1) to the second cultivation cell (2), except for the fact that with the transfer from the second cultivation cell (2) to the third cultivation cell (3), there is a transition from two-layered beds (5) to four-layered beds (5).

In the third cultivation cell (3), another two harvesting phases may possibly take place. Harvesting during these two harvesting phases is performed here in a mechanical way by means of a mechanical picking device. This picking device comprises a blade which is configured to pass across the beds (5) and thus to cut off the mushrooms.

After a cultivation has been removed from a said cultivation cell (1, 2, 3), said cultivation cell (1, 2, 3) is filled virtually immediately with a cultivation which is in an earlier phase of the cultivation cycle. In between two cultivations, the cultivation cell (1, 2, 3) may optionally be cleaned a little. Since every cultivation only spends approximately 14 days in one cultivation cell (1, 2, 3), little cleaning is required due to the fact that few diseases, if any, develop during these 14 days.

Here, the rotation between the cultivation cells (1, 2, 3) is optimal, as a result of which it is possible to execute up to 26 cultivations per year per set of cultivation cells (4). As there are 3 to 4 harvesting phases, the potential of the substrate is used to an optimum extent and a significantly higher yield per cultivation is achieved compared to the existing methods, and without many additional costs.

## Claims

1. Method for cultivating edible fungi, such as mushrooms, on a commercial site, in which cultivation takes place in accordance with a cultivation cycle which successively comprises one or more preparatory phases and one or more harvesting phases, and in which the site comprises at least a set of cultivation cells (4), in which this set (4) comprises a first cultivation cell (1) and a second cultivation cell (2) and the cultivation cycle is distributed over these at least two cultivation cells (1, 2) by moving the cultivation from the first cultivation cell (1), in which at least one preparatory phase takes place, to the second cultivation cell (2), in which at least one harvesting phase takes place in the second cultivation cell, **characterized in that** the set of cultivation cells (4) comprises at least a third cultivation cell (3) and the cultivation cycle comprises at least two harvesting phases, **in that** the cultivation cycle is distributed over said at least 3 cultivation cells (1, 2, 3) of the set of cultivation cells (4) by moving the cultivation from the second cultivation cell (2) to the third cultivation cell (3), and **in that** at least one harvesting phase takes place in the third cultivation cell (3).

2. Method according to Claim 1, **characterized in that** the cultivation takes place on a substrate and the substrate is moved along when the cultivation is moved between two said cultivation cells (1, 2, 3).

3. Method according to Claim 2, **characterized in that** each said cultivation cell (1, 2, 3) comprises beds (5) and the substrate is arranged in the beds (5).

4. Method according to Claim 3, **characterized in that** in one or more of the said cultivation cells (1, 2, 3), two or more layers of beds (5) are arranged on top of one another.

5. Method according to Claim 4, **characterized in that,** in the first cultivation cell (1), several layers of beds (5) are placed one above the other and, in the second cultivation cell (2), the beds (5) are placed in only one layer.

6. Method according to Claim 4 or 5, **characterized in that,** in the third cultivation cell (3), several layers of beds (5) are arranged one above the other.

7. Method according to one of Claims 2 to 6, **characterized in that** mats are used for the cultivation and the substrate is arranged on these mats.

8. Method according to any of the preceding claims, **characterized in that** said at least three cultivation cells (1, 2, 3) of the said set of cultivation cells (4) are virtually in line with one another, in order to thus optimize the displacement of the cultivation between these said three cultivation cells (1, 2, 3).

9. Method according to any of the preceding claims, **characterized in that** the amount of time which the cultivation spends in the first cultivation cell (1) virtually corresponds to the amount of time which the cultivation spends in the second cultivation cell (2).

10. Method according to any of the preceding claims, **characterized in that** every cultivation is distributed over only 3 cultivation cells (1, 2, 3), in which one or more preparatory phases take place in the first cultivation cell (1), at least one harvesting phase takes place in the second cultivation cell (2) and at least one harvesting phase takes place in the third cultivation cell (3).

11. Method according to any of the preceding claims, **characterized in that** a commercial site comprises several said sets of cultivation cells (4), so that several cultivations which are in the same phase of the cultivation cycle can take place simultaneously.

## Patentansprüche

1. Verfahren zur Kultivierung von essbaren Fungi, wie Pilzen, in einer kommerziellen Anlage, worin die Kultivierung gemäß einem Kultivierungszyklus stattfindet, der aufeinander folgend eine oder mehrere Vorbereitungsphasen und eine oder mehrere Erntephasen umfasst, und wobei die Anlage mindestens einen Satz von Kultivierungszellen (4) umfasst, wobei dieser Satz (4) eine erste Kultivierungszelle (1) und eine zweite Kultivierungszelle (2) umfasst und der Kultivierungszyklus über diese mindestens zwei Kultivierungszellen (1, 2) verteilt wird, indem die Kultivierung von der ersten Kultivierungszelle (1), in der mindestens eine Vorbereitungsphase stattfindet, zu der zweiten Kultivierungszelle (2) bewegt wird, wobei mindestens eine Erntephase in der zweiten Kultivierungszelle stattfindet, **dadurch gekennzeichnet, dass** der Satz von Kultivierungszellen (4) mindestens eine dritte Kultivierungszelle (3) umfasst und der Kultivierungszyklus mindestens zwei Erntephasen umfasst, wobei der Kultivierungszyklus über mindestens 3 Kultivierungszellen (1, 2, 3) des Satzes von Kultivierungszellen (4) verteilt wird, indem die Kultivierung von der zweiten Kultivierungszelle (2) zu der dritten Kultivierungszelle (3) bewegt wird, und dass mindestens eine Erntephase in der dritten Kultivierungszelle (3) stattfindet.

2. Verfahren nach Anspruch 1, **dadurch gekennzeichnet, dass** die Kultivierung auf einem Substrat stattfindet und das Substrat weiterbewegt wird, wenn die Kultivierung zwischen zwei der Kultivierungszellen (1, 2, 3) bewegt wird.

3. Verfahren nach Anspruch 2, **dadurch gekennzeichnet, dass** jede Kultivierungszelle (1, 2, 3) Betten (5) umfasst und das Substrat in den Betten (5) angeordnet wird.

4. Verfahren nach Anspruch 3, **dadurch gekennzeichnet, dass** in einer oder mehreren der Kultivierungszellen (1, 2, 3) zwei oder mehr Schichten von Betten (5) übereinander angeordnet sind.

5. Verfahren nach Anspruch 4, **dadurch gekennzeichnet, dass** in der ersten Kultivierungszelle (1) mehrere Schichten von Betten (5) übereinander platziert sind, und die Betten (5) in der zweiten Kultivierungszelle (2) in nur einer Schicht platziert sind.

6. Verfahren nach Anspruch 4 oder 5, **dadurch gekennzeichnet, dass** in der dritten Kultivierungszelle (3) mehrere Schichten von Betten (5) übereinander angeordnet sind.

7. Verfahren nach einem der Ansprüche 2 bis 6, **dadurch gekennzeichnet, dass** für die Kultivierung Matten verwendet werden und das Substrat auf diesen Matten angeordnet wird.

8. Verfahren nach einem der vorhergehenden Ansprüche, **dadurch gekennzeichnet, dass** die mindestens drei Kultivierungszellen (1, 2, 3) des Satzes der Kultivierungszellen (4) praktisch in einer Reihe miteinander angeordnet sind, um dadurch die Verschiebung der Kultivierung zwischen diesen drei Kultivierungszellen (1, 2, 3) zu optimieren.

9. Verfahren nach einem der vorhergehenden Ansprüche, **dadurch gekennzeichnet, dass** die Zeitdauer, die die Kultivierung in der ersten Kultivierungszelle (1) verbringt, praktisch der Zeitdauer entspricht, die die Kultivierung in der zweiten Kultivierungszelle (2) verbringt.

10. Verfahren nach einem der vorhergehenden Ansprüche, **dadurch gekennzeichnet, dass** jede Kultivierung über nur 3 Kultivierungszellen (1, 2, 3) verteilt wird, wobei eine oder mehrere Vorbereitungsphasen in der ersten Kultivierungszelle (1) stattfinden, mindestens eine Erntephase in der zweiten Kultivierungszelle (2) stattfindet, und mindestens eine Erntephase in der dritten Kultivierungszelle (3) stattfindet.

11. Verfahren nach einem der vorhergehenden Ansprüche, **dadurch gekennzeichnet, dass** eine kommerzielle Anlage mehrere der Sätze von Kultivierungszellen (4) umfasst, so dass mehrere Kultivierungen, die sich in derselben Phase des Kultivierungszyklus befinden, simultan stattfinden können.

## Revendications

1. Procédé permettant de cultiver des mycètes comestibles, tels que des champignons, sur un site commercial, dans lequel la culture a lieu selon un cycle de culture qui comprend successivement une ou plusieurs phases préparatoires et une ou plusieurs phases de récolte, et dans lequel le site comprend au moins un ensemble de cellules de culture (4), dans lequel cet ensemble (4) comprend une première cellule de culture (1) et une seconde cellule de culture (2) et le cycle de culture est réparti sur ces au moins deux cellules de culture (1, 2) en déplaçant la culture de la première cellule de culture (1), dans laquelle a lieu au moins une phase préparatoire, à la deuxième cellule de culture (2), dans laquelle a lieu au moins une phase de récolte dans la deuxième cellule de culture, **caractérisé en ce que** l'ensemble de cellules de culture (4) comprend au moins une troisième cellule de culture (3) et le cycle de culture comprend au moins deux phases de récolte, **en ce que** le cycle de culture est réparti sur lesdites au moins 3 cellules de culture (1, 2, 3) de l'ensemble de cellules de culture (4) en déplaçant la culture de la deuxième cellule de culture (2) à la troisième cellule de culture (3), et **en ce qu'**au moins une phase de récolte a lieu dans la troisième cellule de culture (3).

2. Procédé selon la revendication 1, **caractérisé en ce que** la culture a lieu sur un substrat et le substrat est déplacé lorsque la culture est déplacée entre deux dites cellules de culture (1, 2, 3).

3. Procédé selon la revendication 2, **caractérisé en ce que** chaque dite cellule de culture (1, 2, 3) comprend des lits (5) et le substrat est agencé dans les lits (5).

4. Procédé selon la revendication 3, **caractérisé en ce que** dans une ou plusieurs desdites cellules de culture (1, 2, 3), deux ou plusieurs couches de lits (5) sont agencées les unes sur les autres.

5. Procédé selon la revendication 4, **caractérisé en ce que,** dans la première cellule de culture (1), plusieurs couches de lits (5) sont placées les unes au-dessus des autres et, dans la seconde cellule de culture (2), les lits (5) sont placés en une seule couche.

6. Procédé selon la revendication 4 ou 5, **caractérisé en ce que,** dans la troisième cellule de culture (3), plusieurs couches de lits (5) sont agencées les unes au-dessus des autres.

7. Procédé selon l'une des revendications 2 à 6, **caractérisé en ce que** des tapis sont utilisés pour la culture et le substrat est agencé sur ces tapis.

8. Procédé selon une quelconque des revendications précédentes, **caractérisé en ce que** lesdites au moins trois cellules de culture (1, 2, 3) dudit ensemble de cellules de culture (4) sont pratiquement alignées les unes sur les autres, afin d'optimiser ainsi le déplacement de la culture entre ces dites trois cellules de culture (1, 2, 3).

9. Procédé selon l'une quelconque des revendications précédentes, **caractérisé en ce que** le temps que la culture passe dans la première cellule de culture (1) correspond pratiquement au temps que la culture passe dans la seconde cellule de culture (2).

10. Procédé selon l'une quelconque des revendications précédentes, **caractérisé en ce que** chaque culture est répartie sur seulement 3 cellules de culture (1, 2, 3), dans lesquelles une ou plusieurs phases préparatoires ont lieu dans la première cellule de culture (1), au moins une phase de récolte a lieu dans la deuxième cellule de culture (2) et au moins une phase de récolte a lieu dans la troisième cellule de culture (3).

11. Procédé selon l'une quelconque des revendications précédentes, **caractérisé en ce qu'**un site commercial comprend plusieurs dits ensembles de cellules de culture (4), de sorte que plusieurs cultures qui se trouvent dans la même phase du cycle de culture puissent avoir lieu simultanément.
